# EUROPÄISCHE PATENTSCHRIFT

(11) **EP 0 621 811 B1**
(45) Veröffentlichungstag und Bekanntmachung des Hinweises auf die Patenterteilung: **21.06.1995**
(21) Anmeldenummer: 93902154.9
(22) Anmeldetag: 08.01.1993
(51) Int. Cl.: B09B 3/00, E21B 41/00

(54) **VERBESSERTE ENTSORGUNG VON KONTAMINIERTEM BOHRKLEIN**
IMPROVED METHOD OF DISPOSAL OF CONTAMINATED CUTTINGS
ELIMINATION AMELIOREE DE DEBRIS DE FORAGE CONTAMINES

(30) Priorität: 13.01.1992 DE 4200502
(43) Veröffentlichungstag der Anmeldung: 02.11.1994
(73) Patentinhaber: Henkel Kommanditgesellschaft auf Aktien, 40191 Düsseldorf (DE); BAROID LIMITED, Aberdeen Scotland AB1 2NJ (GB)
(72) Erfinder: HEROLD, Claus-Peter, D-4020 Mettmann (DE); MÜLLER, Heinz, D-4019 Monheim (DE); VON TAPAVIZCA, Stephan, D-4006 Erkrath (DE); ELLICE, Malcolm, Aberdeen AB1 9GX (GB); GRIMES, Douglas, John, Beaconsfield HP9 2PZ (GB)
(74) Vertreter: von Kreisler, Alek, Dipl.-Chem.
(86) Internationale Anmeldenummer: EP9300022
(87) Internationale Veröffentlichungsnummer: WO9313882

(56) Entgegenhaltungen:
- WO-A-82/01737
- DE-A- 3 213 268
- DE-A- 3 842 703
- DE-A- 3 911 299
- DE-A- 4 018 228
- US-A- 4 242 146
- US-A- 4 606 283

## Beschreibung

Ölbasierten Bohrspülflüssigkeiten und darauf aufgebauten W/O-Invert-Bohrspülschlämmen kommt in der modernen Technologie geologischer Aufschlüsse beispielsweise zur Erschließung von Erdöl- und/oder Erdgasvorkommen überragende Bedeutung zu. Der Einsatz dieser Bohrspülsysteme hat besondere Bedeutung im marinen Bereich, ist aber nicht darauf eingeschränkt. Die Technologie des Bohrens mittels ölbasierter W/O-Invert-Systeme findet ganz allgemein Verwendung auch bei landgestützten Bohrungen, beispielsweise beim Geothermiebohren, beim Wasserbohren, bei der Durchführung geowissenschaftlicher Bohrungen und bei Bohrungen im Bergbaubereich.

Flüssige Spülsysteme der hier betroffenen Art, die insbesondere im Bereich der off-shore-Bohrungen oder beim Durchteufen wasserempfindlicher Schichten den wasserbasierten Systemen weit überlegen sind, werden im allgemeinen als sogenannte Invert-Emulsionsschlämme eingesetzt, die aus einem Drei-Phasen-System bestehen: Öl, Wasser und feinteilige Feststoffe. Es handelt sich dabei um Zubereitungen vom Typ der W/O-Emulsionen, d.h. die wäßrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren beziehungsweise Emulgatorsysteme, Beschwerungsmittel, fluid-loss-Additive, Alkalireserven, Viskositätsregler und dergleichen. Zu Einzelheiten wird beispielsweise verwiesen auf die Veröffentlichung P.A. Boyd et al. "New Base Oil Used in Low-Toxicity Oil Muds" Journal of Petroleum Technology, 1985, 137 bis 142 sowie R.B. Bennett "New Drilling Fluid Technology - Mineral Oil Mud" Journal of Petroleum Technology, 1984, 975 bis 981 sowie die darin zitierte Literatur.

Ölbasierte Bohrspülungen waren zunächst aufgebaut auf Dieselölfraktionen mit einem Gehalt an Aromaten. Zur Entgiftung und Verminderung der damit geschaffenen ökologischen Problematik wurde vorgeschlagen, weitgehend aromatenfreie Kohlenwasserstofffraktionen - heute auch als "nonpolluting oils" bezeichnet - als geschlossene Ölphase einzusetzen - siehe hierzu die zuvor zitierte Literatur. Aber auch der Ausschluß der aromatischen Verbindungen aus den Mineralölen führt nur zu einer beschränkten Minderung der Umweltproblematik - ausgelöst durch die Bohrspülflüssigkeiten der hier betroffenen Art. Schwierigkeiten bestehen insbesondere für die Entsorgung der von der Spülungsphase abgetrennten sogenannten cuttings, d.h. des erbohrten und mit der Bohrspülflüssigphase nach oben transportierten Bohrkleins. Im praktischen Betrieb werden diese erbohrten Gesteinsanteile beispielsweise durch ein- und mehrstufiges Sieben und/oder durch weiterführende Trennschritte wie Zentrifugieren aus der Hauptmenge der im Kreislauf geführten Bohrspülflüssigphase abgetrennt. Dieses abgetrennte Bohrklein ist mit beträchtlichen Mengen der ölbasierten Bohrspülflüssigphase benetzt. Beim Einsatz von Bohrspülsystemen auf Basis der nicht abbaubaren Mineralöle als geschlossene Ölphase kommt die Bohrkleinentsorgung durch einfaches Deponieren auf dem Meeresgrund heute nicht mehr in Betracht. Ökologische Untersuchungen haben gezeigt, daß Mineralölverschmutzungen auch nach langen Lagerfristen am Meeresboden noch vorhanden sind und das besonders empfindliche marine Ökosystem negativ beeinflussen können. Gleiche Probleme fallen beim Arbeiten mit Wasser-basierten O/W-Emulsionsspülungen an.

Die einschlägige Technologie hat seit einiger Zeit die Bedeutung des Einsatzes von ökologisch verträglichen und insbesondere biologisch abbaubaren Ölen beziehungsweise Ölphasen im Zusammenhang mit dem Aufbau von ölhaltigen Bohrspülsystemen erkannt. So beschreiben beispielsweise die US-Patentschriften 4,374,737 und 4,481,121 ölbasierte Bohrspülflüssigkeiten, in denen nonpolluting oils Verwendung finden sollen. Als nonpolluting oils werden neben aromatenfreien Mineralölfraktionen Pflanzenöle von der Art Erdnußöl, Sojabohnenöl, Leinsamenöl, Maisöl, Reisöl oder auch Ölen tierischen Ursprungs wie Walöl genannt. Weiterführende Untersuchungen haben gezeigt, daß dieser im Stand der Technik erwogene Einsatz von leicht abbaubaren Ölen auf Basis von Triglyceriden pflanzlichen und/oder tierischen Ursprungs aus praktischen Gründen nicht in Betracht kommen kann. Die rheologischen Eigenschaften solcher Ölphasen sind für den in der Praxis geforderten Temperaturbereich von 0 bis 5°C einerseits bis zu 250°C und darüber andererseits nicht in den Griff zu bekommen.

Die Anmelderin beschreibt in einer größeren Zahl veröffentlichter und teilweise noch nicht veröffentlichter älterer Schutzrechte Vorschläge zum Austausch der Mineralölfraktionen gegen ökologisch verträgliche leicht abbaubare Ölphasen. Dabei werden 4 unterschiedliche Typen von Austauschölen dargestellt, die auch in Mischung miteinander eingesetzt werden können. Es handelt sich hierbei um ausgewählte oleophile Monocarbonsäureester und entsprechende Polycarbonsäureester, um wenigstens weitgehend wasserunlösliche unter Arbeitsbedingungen fließfähige Alkohole beziehungsweise deren Partialether, um entsprechende Ether und um ausgewählte Kohlensäureester. Summarisch wird hier verwiesen auf die veröffentlichten und älteren Anmeldungen DE-A-38 42 659, DE-A-38 42 703, DE-A-39 07 391, DE-A-39 07 392, DE-A-39 03 785, DE-A-39 03 784, DE-A-39 11 238, DE-A-39 11 299, DE-A-40 19 266 und DE-A-40 18 228. Alle hier genannten Druckschriften betreffen das Gebiet ölbasierter Bohrspülschlämme, insbesondere vom W/O-Invert-Typ.

Ölbasierte Bohrspülsysteme auf Basis entsprechender Monocarbonsäureester und/oder auf Basis von Ethern monofunktioneller Alkohole sind heute in dem praktischen Einsatz erprobt und haben ihre vielgestaltige Überlegenheit gegenüber den Mineralöl-basierten Bohrspülungen insbesondere vom W/O-Invert-Typ bewiesen. Eine der wichtigen Erleichterungen beim Arbeiten mit ökologisch verträglichen und insbesondere biologisch abbaubaren Ölen dieser Art liegt in der vereinfachten Entsorgung des mit Ölspülung benetzten Bohrkleins. Wird das von der Spülung beispielsweise durch Sieben und/oder Zentrifugieren abgetrennte Bohrklein auf dem Meeresboden deponiert, so findet keine Verseuchung des betroffenen Bereiches statt. Das marine Ökosystem bleibt im wesentlichen ungestört, nach vergleichsweise kurzen Zeiträumen sind beispielsweise die eingetragenen Bohrspülsysteme auf Esterbasis praktisch vollständig abgebaut.

### Zur Aufgabe der Erfindung

Die Lehre der vorliegenden Erfindung geht von der Aufgabenstellung aus, unter Einschluß des heute zur Verfügung stehenden Wissens zur Ökoverträglichkeit der biologisch abbaubaren Ölphasen in Systemen der hier betroffenen Art die Möglichkeit zu erschließen, Mineralöl-enthaltende Bohrspülsysteme und insbesondere W/O-Invert-Spül-schlämme auf Basis von überwiegend Mineralölen beziehungsweise Mineralölfraktionen im praktischen Betrieb einzusetzen, ohne die Vorteile aufgeben zu müssen, die insbesondere für die Deponierung des Bohrkleins mit den zuvor geschilderten bioverträglichen Systemen erhalten werden können. Der Einsatz von Mineralölen beziehungsweise Mineralölfraktionen als Hauptkomponente der Invert-Spülsysteme - aber auch in Wasser-basierten Spülungen vom O/W-Typ - kann beispielsweise aus Gesichtspunkten der Verfügbarkeit und/oder aus Kostengesichtspunkten wünschenswert sein, wenn gleichzeitig zuverlässig sichergestellt werden kann, daß unerwünschte Kontaminationen der Umwelt und insbesondere des marinen Ökosystems durch diese an sich ökotoxischen Spülflüssigkeiten vermieden wird. Die bis heute eingesetzte Praxis sieht hier den Transport der Mineralöl-kontaminierten cuttings an das Festland und dort deren Reinigung - beispielsweise durch Wäsche mit wäßrigen Tensidlösungen - und/oder ihre Deponierung vor.

Die erfindungsgemäße Lehre geht von der Konzeption aus, das angestrebte Ziel auf einem bisher nicht beschriebenen Wege zu verwirklichen: Die Erfindung will die Bewältigung der geschilderten Problematik durch einen Austausch der Ölphase auf dem von der Bohrspülung abgetrennten Bohrklein ermöglichen. Die ökologisch unverträgliche Benetzung mit der Ölphase auf Mineralölbasis soll insbesondere ersetzt werden durch eine Ölphase auf Basis ökologisch verträglicher und insbesondere biologisch abbaubarer Öle. Gleichzeitig soll aber diese zusätzliche Maßnahme unter wirtschaftlich vertretbaren Material- und Kostenbelastungen des Gesamtprozesses ermöglicht werden.

### Gegenstand der Erfindung

Gegenstand der Erfindung ist dementsprechend die Verwendung von ökologisch verträglichen und insbesondere biologisch abbaubaren Ölen mit Flammpunkten oberhalb 80°C zur Wäsche von Mineralöl-belastetem Bohrklein (cuttings) vor dessen Entsorgung durch off-shore und/oder on-shore Deponierung. Als ökologisch verträgliche Waschöle werden erfindungsgemäß insbesondere aerob und/oder anaerob abbaubare niedrig-viskose Öle eingesetzt, die ihrerseits aufgrund ihrer Produkteigenschaften - beispielsweise Rheologie, Flüchtigkeit, Toxikologie, Mischbarkeit und dergleichen - geeignet sind, in Bohrspülungen und dabei insbesondere als Mischungsbestandteil der geschlossenen Ölphase von W/O-Invert-Bohrspülungen eingesetzt werden zu können.

Besonders geeignete ökologisch verträgliche und insbesondere biologisch abbaubare Waschöle fallen in die eingangs zitierten Stoffklassen oleophiler Monocarbonsäureester beziehungsweise oleophiler Polycarbonsäureester, entsprechender Ether beziehungsweise Alkohole und/oder deren Partialether, sowie oleophiler Kohlensäureester, wie sie in den eingangs zitierten älteren Anmeldungen der Anmelderin im einzelnen geschildert sind. Im nachfolgenden werden diese erfindungsgemäß bevorzugten aerob und/oder anaerob abbaubaren Öle auch als "Sauerstoff-funktionalisierte Waschöle" beziehungsweise als "O-funktionalisierte" Waschöle" bezeichnet.

### Einzelheiten zur erfindungsgemäßen Lehre

Die Lehre der Erfindung geht von der nachfolgenden Konzeption aus:
Die im praktischen Betrieb kontinuierlich von einer mit cuttings beladenen ölhaltigen Bohrspülung abzutrennenden Anteile an Bohrklein enthalten beträchtliche Mengen der Ölphase, im Falle der W/O-Invert-Spülunen der ölbasierten Bohrspülung, auf ihrer Oberfläche. Im erfindungsgemäß vorgesehenen Fall enthält diese Bohrspülung substantielle Mengen - in der Regel wenigstens überwiegende Mengen - an Mineralöl. Die vom Bohrklein befreite Bohrspülung wird im Kreislauf in das Bohrloch zurückgeführt. Dieser Kreislaufstrom der Mineralöl-basierten Bohrspülflüssigkeit kann von unerwünschten Kontakten mit dem empfindlichen Ökosystem ferngehalten werden.

Die bisher problematische Entsorgung der mit Mineralöl kontaminierten cuttings erfolgt erfindungsgemäß jetzt durch deren Wäsche mit den O-funktionalisierten Waschölen. Hierdurch wird das ökologisch unverträgliche Mineralöl von den cuttings verdrängt, die Ölbeladung auf den cuttings wird durch das biologisch abbaubare O-funktionalisierte Waschöl ersetzt. In dieser Form können die jetzt mit aerob und/oder anaerob abbaubaren Ölen benetzten cuttings bedenkenlos off-shore und/oder on-shore deponiert werden. Die angestrebte Erleichterung in der Beseitigung des Bohrkleins ist damit sichergestellt.

Die Wirtschaftlichkeit einer solcher Arbeitsmaßnahme - dargestellt am Fall der besonders wichtigen Spülungssysteme auf W/O-Invert-Basis - wird durch die nachfolgenden bevorzugten Elemente des erfindungsgemäßen Handelns optimiert: Die mit dem Kreislaufstrom der W/O-Bohrspülflüssigkeit nach oben transportierte Menge des Bohrkleins ist bekanntlich im Verhältnis zur umgewälzten Menge des W/O-Invert-Schlammes sehr klein. Sie beträgt üblicherweise bestenfalls wenige Vol.-%. Vergleichsweise klein sind dementsprechend auch die zur Wäsche der ölbeladenen cuttings benötigten Anteile an O-funktionalisierten Waschölen, wobei hier zusätzlich ja der im Betrieb auftretende Bohrfortschritt und die damit notwendige ständige Nachdosierung zusätzlicher Mengen an W/O-Invert-Schlamm zu berücksichtigen sind.

In der bevorzugten Ausführungsform des erfindungsgemäßen Handelns werden Waschöle eingesetzt, die nicht nur das Erfordernis der biologischen Verträglichkeit und der Abbaubarkeit im jeweiligen Ökosystem erfüllen. Die erfindungsgemäß bevorzugten Waschöle sind dabei zusätzlich derart ausgewählt, daß sie ihrerseits befähigt sind, wenigstens als Mischungskomponenten in Abmischung mit den Mineralölen des W/O-Invert-Schlammes die Funktion der geschlossenen Ölphase in diesem Bohrspülsystem zu übernehmen. Der Vorteil eines Handelns im Sinne dieser erfindungsgemäßen Maßnahme leuchtet sofort ein: Die mit Mineralöl verunreinigten verbrauchten Waschöle werden ganz einfach dadurch entsorgt, daß sie in den Kreislauf des W/O-Invert-Schlammes eingespeist und damit Bestandteil der Bohrspülung selber werden. Die erfindungsgemäße Lehre ermöglicht damit die optimale Nutzung der biologisch verträglichen und abbaubaren O-funktionalisierten Waschöle in vergleichsweise beschränkter Menge unter Beibehaltung der im wesentlichen Mineralöl-basierten Bohrspülsysteme, ohne den entscheidenden Vorteil der erleichterten Bohrkleindeponierung aufgeben zu müssen. Vergleichbare Überlegungen gelten für das Arbeiten mit Wasser-basierten emulgierten Mineralöl-enthaltende O/W-Emulsionsspülungen.

Die Auswahl besonders geeigneter biologisch abbaubarer Waschöle wird durch die von ihnen im Sinne der Erfindung geforderte doppelte Funktionalität gesteuert. Die Waschöle sollen einerseits im Rahmen des Waschprozesses als bevorzugt niedrig-viskose organische Flüssigphase gut mischbar mit der Mineralölphase z.B. des W/O-Invert-Schlammes sein, so daß eine wirkungsvolle Wäsche der cuttings mit beschränkten Mengen des O-funktionalisierten Waschöls möglich wird. Auf der anderen Seite müssen diese Waschöle wirkungsvolle Bestandteile der geschlossenen Ölphase des Invert-Schlammes nach ihrer Einmischung in die Bohrspülung sein. Bevorzugte O-funktionalisierte Waschöle zeigen dementsprechend Fließ- und Stockpunkte nicht oberhalb 5°C und insbesondere unterhalb 0°C. Besonders geeignet können entsprechende Waschöle mit Fließ- und Stockpunkten unterhalb -5°C und insbesondere unterhalb -15°C sein. Praktisch brauchbare biologisch abbaubare Öle liegen oftmals mit ihren Erstarrungswerten im Temperaturbereich unterhalb -25° bis -30°C. Die Viskosität der Waschöle kann insbesondere in der ersten Stufe ihres Einsatzes, d.h. beim Waschprozeß der z.B. mit Invert-Schlamm beladenen cuttings wichtig sein. Um hier optimale Lösungsmittel- und Waschöl-Qualität zu entwickeln, kann es zweckmäßig sein, leicht bewegliche und auch in niederen Temperaturbereichen niedrig-viskose Flüssigphasen einzusetzen. Üblicherweise gilt, daß die O-funktionalisierten Waschöle im Temperaturbereich von 0 bis 5°C fließ- und pumpfähige Öle sein sollen, die bevorzugte Brookfield-(RVT)-Viskositäten unterhalb 80 mPas und vorzugsweise unterhalb 60 mPas besitzen. Besonders geeignete Waschöle können im angegebenen Temperaturbereich Viskositäten bis etwa 45 mPas aufweisen.

In diesem Zusammenhang ist allerdings das folgende zusätzliche bevorzugte Arbeitselement des erfindungsgemäßen Handelns zu berücksichtigen: Die im einzelnen noch zu schildernde Wäsche der Mineralöl-beladenen cuttings kann in einer wichtigen Ausführungsform des erfindungsgemäßen Handelns bei erhöhten Temperaturen, insbesondere im Temperaturbereich bis etwa 100°C und vorzugsweise im Temperaturbereich von ca. 35° bis 80°C durchgeführt werden. Die mit Bohrklein beladene Bohrspülung erreicht ja bereits beim Einstellen beschränkter Bohrlochtiefe angehobene Temperaturwerte, so daß im praktischen Betrieb die geförderte Spülung und damit auch die in ihr erhaltenen cuttings Temperaturwerte im Bereich von beispielsweise 35° bis 60°C aufweisen. In einer wichtigen Ausführungsform macht die erfindungsgemäße Lehre in der Stufe der Cuttingwäsche davon insbesondere dadurch Gebrauch, daß auch das O-funktionalisierte Waschöl auf vergleichbare oder gar auf noch höhere Temperaturen aufgeheizt in den Waschprozeß eingesetzt wird. In an sich bekannter Weise ist damit die Absenkung der Viskosität des Waschöls und damit die Verbesserung seiner hier geforderten Funktion als Wasch- beziehungsweise Lösungsmittel verbunden.

### Die erfindungsgemäß bevorzugten O-funktionalisierten Waschöle

Summarisch sei hier noch einmal auf die zuvor zitierten älteren veröffentlichten und anteilsweise noch nicht veröffentlichten älteren Anmeldungen der einen Anmelderin verwiesen, die durchweg das Gebiet ölbasierter Bohrspülschlämme insbesondere vom W/O-Invert-Typ betreffen. Im einzelnen sind in diesen Anmeldungen geeignete Ester von Monocarbonsäuren, geeignete Ester unter Mitverwendung von Polycarbonsäuren, geeignete Ether sowie geeignete oleophile Alkohole einschließlich deren Partialether und geeignete oleophile Kohlensäureester beschrieben. Der Gegenstand dieser genannten älteren Anmeldungen zum bestimmten Typ der jeweils offenbarten O-funktionalisierten Ölphasen wird hiermit ausdrücklich zum Gegenstand auch der vorliegenden Erfindungsoffenbarung gemacht.

Besonders wichtige Vertreter für die Waschöle im Sinne des erfindungsgemaßen Handelns ordnen sich in die Klassen oleophiler Carbonsäureester und oleophiler Ether ein. Insbesondere oleophile Carbonsäureester können dank ihrer hohen Befähigung sowohl zum aeroben biologischen Abbau wie zum anaeroben biologischen Abbau besonders geeignete Vertreter sein. Der Fachwelt liegen heute sogenannte sea-floor-Tests vor, die die Unbedenklichkeit der Entsorgung von esterbeladenen cuttings aus Bohrspülungen der hier betroffenen Art belegen.

Einheitlich gilt für alle erfindungsgemäß bevorzugt zu verwendenden Ölphasen beziehungsweise Ölmischphasen, daß Flammpunkte von wenigstens etwa 100°C und vorzugsweise Flammpunkte oberhalb etwa 135°C aus Sicherheitsgründen im Betrieb gefordert werden. Deutlich darüber liegende Werte, insbesondere solche oberhalb 150°C können besonders zweckmäßig sein.

Einheitlich gilt weiterhin für die verschiedenen potentiell hydrolysegefährdeten Ölphasen, die im erfindungsgemäßen Rahmen eingesetzt werden können, daß das Erfordernis der ökologischen Verträglichkeit nicht nur für die Waschöle als solche, d.h. also beispielsweise das jeweils gewählte Esteröl oder Gemisch von Esterölen erfüllt ist, sondern daß auch bei einer partiellen Verseifung im praktischen Einsatz keine toxikologischen und insbesondere keine inhalationstoxikologischen Gefährdungen ausgelöst werden. Es ist im Rahmen der genannten älteren Anmeldungen ausführlich geschildert, daß hier insbesondere die verschiedenen Vertreter der Esteröle angesprochen sind, wobei hier wiederum monofunktionellen Alkoholen aus der Esterbildung besondere Bedeutung zukommt. Monofunktionelle Alkohole sind im Vergleich zu polyfunktionellen Alkoholen in ihren niederen Gliedern hoch-flüchtig, so daß durch eine Partialhydrolyse hier sekundäre Gefährdungen auftreten könnten. Bevorzugt sind dementsprechend in den Klassen der verschiedenen Esteröle mitverwendete monofunktionelle Alkohole beziehungsweise die entsprechende Reste dieser Alkohole so gewählt, daß sie im Molekül wenigstens 6 C-Atome, vorzugsweise wenigstens 8 C-Atome besitzen. Hydrolyse-stabile Ether können für den praktischen Einsatz als Bestandteil der geschlossenen Ölphase der Bohrlochbehandlungsmittel - im Anschluß an ihre Verwendung als Wasch- beziehungsweise Reinigungsmittel für die von Mineralölanteilen zu befreienden cuttings - besonders wichtig sein.

Als ökologisch verträgliche und biologisch abbaubare Esteröle haben sich insbesondere entsprechende Monocarbonsäureester erwiesen, die dann in einer bevorzugten Ausführungsform der Erfindung sich aus wenigstens einer der nachfolgenden Unterklassen ableiten:
a) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome, aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und 1- und/oder mehrfunktionellen Alkoholen der unter a) genannten Art,
c) Ester olefinisch 1- und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

Ausgangsmaterialien für die Gewinnung zahlreicher in diese Unterklassen fallenden Monocarbonsäuren, insbesonderer höherer Kohlenstoffzahl, sind pflanzliche und/oder tierische Fette und/oder Öle. Genannt seien Talg, Kokosöl, Palmkernöl und/oder Babassuöl, insbesondere als Einsatzmaterialien für die Gewinnung von Monocarbonsäuren des überwiegenden Bereichs bis C₁₈ und von im wesentlichen gesättigten Komponenten. Pflanzliche Esteröle, insbesondere für olefinisch 1- und gegebenenfalls mehrfach ungesättigte Carbonsäuren des Bereich von C₁₆₋₂₄ sind beispielsweise Palmöl, Erdnußöl, Rizinusöl, Sonnenblumenöl, Leinöl und insbesondere Rüböl. Aber auch Ester auf Tallölbasis fallen in diese Kategorie vergleichsweise hoch beweglicher Monocarbonsäureester mit 1- und/oder mehrfach olefinisch ungesättigten Elementen. Neben solchen Estern weitgehend auf Naturstoffbasis sind aber auch synthetisch gewonnene Komponenten sowohl auf der Carbonsäureseite als auf der Seite der Alkohole wichtige Strukturelemente für ökologisch verträgliche und biologisch abbaubare Ölphasen.

Besonders wichtige Monocarbonsäureester für die erfindungsgemäßen Einsatzzwecke sind in den eingangs genannten älteren Anmeldungen DE-A-38 42 659 und insbesondere DE-A-38 42 703 beschrieben, auf deren Offenbarung hier nochmals ausdrücklich verwiesen wird. Die olefinisch ungesättigten Ester der hier zuerst genannten Druckschrift fallen bezüglich ihrer Zusammensetzung in den zuvor unter c) benannten Bereich, die besonders wichtigen Ester gemäß der DE-A-38 42 703 ordnen sich in die zuvor unter b) zusammengefaßte Untergruppe geeigneter Monocarbonsäureester ein. Betroffen sind hier insbesondere im Temperaturbereich von 0 bis 5°C fließ- und pumpfähige Ester aus monofunktionellen Alkoholen mit bis zu 12 C-Atomen und aliphatisch gesättigten Monocarbonsäuren mit 12 bis 16 C-Atomen oder deren Abmischungen mit untergeordneten Mengen anderer Monocarbonsäuren. Esteröle dieser Art, die zu wenigstens etwa 60 Gew.-% - bezogen auf Carbonsäuregemisch - Ester aliphatischer C₁₂₋₁₄-Monocarbonsäuren sind, können besonders geeignet sein. Ein wichtiger Vertreter dieser Klasse von Esterölen wird von der einen Anmelderin unter dem Handelsnamen "PETROFREE" (eingetragenes Warenzeichen) vertrieben.

Waschöle auf Esterbasis sind immer dann geeignet, wenn unter den praktischen Einsatzbedingungen der Bohrspülung mit hinreichender Stabilität der Ester in den W/O-Invert-Schlämmen gerechnet werden kann. Im einzelnen wird auf die zitierten Druckschriften zu dem Einsatz dieser Ester in Bohrspülungen verwiesen. Werden unter den Arbeitsbedingungen der Bohrspülung vergleichsweise hohe Anforderungen an eine potentielle Hydrolysestabilität gestellt - beispielsweise beim Arbeiten unter hohen Temperaturen, insbesondere im Temperaturbereich von 150°C aufwärts - dann kann die Verwendung von Etherölen als O-funktionalisiertes Waschöl zweckmäßig sein. Die nachfolgende Einmischung dieser Etheröle in die Mineralöl-basierte Bohrspülung führt zu keiner substantiellen Einschränkung der Temperaturbelastbarkeit einer solchen Invertspülung.

Bevorzugte Waschöle der hier betroffenen Art sind Ether, Mischether und/oder Ethergemische von monofunktionellen Alkoholen mit wenigstens 6 C-Atomen, die auch Mischether mit eingebundenen Resten mehrwertiger Alkohole enthalten können. Im Rahmen der hier betroffenen Etheröle eignen sich besonders solche Verbindungen, die sich von wenigstens anteilsweise, bevorzugt von wenigstens überwiegend geradkettigen monofunktionellen Alkoholen ableiten, wobei die Ether entsprechender Monoalkohole mit 8 bis 12 C-Atomen und/oder deren Mischether mit 2- bis 4-wertigen Alkoholen mit gerader und/oder verzweigter C-Kette besonders bevorzugt sind.

Im Zusammenhang mit dem Einsatz der hier besonders herausgestellten Esteröle und/oder Etheröle sei auf einen wichtigen zusätzlichen Vorteil verwiesen, der als Ergebnis des erfindungsgemäßen Handelns sich in der Mineralöl-basierten Bohrspülflüssigkeit - der W/O-Invert-Emulsion, aber auch bei O/W-Emulsionen - bemerkbar macht: Es ist bekannt, daß Mineralöl-enthaltende Bohrspülungen der hier betroffenen Art zwar eine deutlich bessere Schmierfähigkeit im praktischen Einsatz im Vergleich zu rein wasserbasierten Bohrspülungen besitzen, gleichwohl ist die durch das Mineralöl erreichbare Verbesserung der Schmierfähigkeit begrenzt. Der praktische Einsatz beispielsweise der esterbasierten Bohrspülungen auf Basis des erwähnten Handelsproduktes "PETROFREE" (eingetragenes Zeichen) hat gezeigt, daß substantielle Verbesserungen der Schmierung im praktischen Betrieb über die Esterölphase einstellbar sind. Im Rahmen des erfindungsgemäßen Handelns werden die O-funktionalisierten Waschöle letztlich der W/O-Invert-Spülung zudosiert. Sie werden hier Bestandteil der geschlossenen Ölphase, die zu einem wenigstens substantiellen Anteil Mineralöl-basiert ist. Durch die Zumischung der O-funktionalisierten Waschöle in diese Bohrspülung wird deren Schmierwirkung substantiell verbessert, so daß auch hier von einer wichtigen sekundären Verbesserung Gebrauch gemacht werden kann. Bedeutungsvoll ist das nicht nur für den Normalbetrieb einer vertikalen Bohrung, praktische Bedeutung erhält diese Verbesserung der Schmierwirkung insbesondere bei Schrägbohrungen, abgeleiteten Bohrungen und/oder Horizontalbohrungen.

Im Sinne dieser Verbesserung einer wichtigen Produktbeschaffenheit kann es wünschenswert sein als O-funktionalisiertes Waschöl eine solche Komponente der genannten Art einzusetzen, die in Abmischung mit der W/O-Invert-Hauptspülung eine Optimierung des Schmiereffektes ermöglicht. Hier können Waschöle mit einer Mehrzahl von Estergruppierungen, beispielsweise nieder-viskose Polycarbonsäureester der DE-A-40 19 266 und/oder Kohlensäurediester der DE-A-40 18 228 die bevorzugten Arbeitsmittel sein.

Lediglich der Vollständigkeithalber sei ausdrücklich darauf verwiesen, daß auch beliebige Abmischungen der O-funktionalisierten Waschöle der in den genannten älteren Anmeldungen beschriebenen Art im Rahmen der erfindungsgemaßen Lehre zum Einsatz kommen können.

### Weitere Einzelheiten zur erfindungsgemäßen Lehre

Die Wäsche des mit der Mineralöl-basierten Bohrspülung belegten Bohrkleins unter Einsatz der biologisch abbaubaren O-funktionalisierten Waschöle kann absatzweise und/oder kontinuierlich in praktisch beliebiger Weise erfolgen. Es kann dabei einstufig oder auch mehrstufig gearbeitet werden. Die Waschverfahren können mit Gleichstrom des zu waschenden Gutes und der Waschflüssigkeit oder auch im Gegenstrom dieser beiden Phasen zueinander geführt werden.

Die Wäsche kann dabei in einer bevorzugten Ausführungsform unmittelbar beim Anfall des Mineralöl-beladenen Bohrkleins - bei off-shore-Bohrungen also beispielsweise auf dem Bohrturm - erfolgen, selbstverständlich kann aber auch das zu reinigende Bohrklein zuvor zu einer an anderem Ort installierten Waschanlage transportiert werden. Die im Waschverfahren einzusetzenden Technologien entsprechen dem vorbekannten Wissen, beispielsweise aus der Reinigung ölbeladener und verschmutzter Erd- beziehungsweise Gesteinswäsche. Vorteilhaft ist im Rahmen der erfindungsgemäßen Reinigung, daß als Waschöl eine nicht wäßrige hydrophobe Ölphase eingesetzt wird und nicht etwa wäßrige Tensidlösungen, wie es in der bisher bekannten Cuttingwäsche vorgeschlagen wird. Die cuttings, insbesondere aus off-shore-Bohrungen, sind bekanntlich häufig quellfähige Tone, die beim Einsatz von wäßrigen Waschlösungen zu unerwünschten Sekundärreaktionen neigen.

Im Rahmen einer mehrstufige Cuttingwäsche verdient eine besondere Ausführungsform des erfindungsgemäßen Handelns hervorgehoben zu werden: In dieser Ausführungsform wird in einer wenigstens zweistufigen Wäsche in einer ersten Waschstufe das zu reinigende Bohrklein mit einer Ölphase auf Mineralölbasis gewaschen. Hier kann insbesondere die Kohlenwasserstofffraktion eingesetzt werden, die der geschlossenen Ölphase aus der W/O-Invert-Emulsion auf Mineralölbasis entspricht. Im Rahmen dieser ersten Waschstufe mit einem entsprechenden dünnflüssigen Mineralöl kann ein besonders einfaches Abwaschen der W/O-Invert-Schlammrückstände von der Cuttingoberfläche erfolgen, so daß für die nachfolgende Waschstufe(n) im wesentlichen nur noch der Austausch der Ölphasen ansteht, d.h. der Austausch des Mineralöls gegen das O-funktionalisierte Waschöl im Sinne der erfindungsgemäßen Lehre. Auch hier ist die vollständige Entsorgung der jeweils gewählten Waschöle in der geschilderten Weise möglich, daß sie nachfolgend der W/O-Invert-Bohrspülung zugemischt und dort Bestandteil der geschlossenen Ölphase werden.

Wie bereits angegeben kann zur Intensivierung und Erleichterung - insbesondere auch zur Abkürzung - der Waschstufe(n) der Einsatz erhöhter Arbeitstemperaturen insbesondere bis etwa 90°C, beispielsweise im Bereich von etwa 45° bis 75°C zweckmäßig sein.

Eine weitere Arbeitserleichterung für die Ölwäsche liegt in der folgenden Ausgestaltung dieser Arbeitsstufe(n): Die Wäsche kann in Gegenwart erhöhter Konzentrationen von Emulgatoren und zwar insbesondere Emulgatoren vom W/O-Typ durchgeführt werden. Zweckmäßigerweise wird hierzu der zusätzliche Emulgatorbetrag dem Waschöl Zugemischt. Hierdurch kann eine beträchtliche Erleichterung der Aufnahme nicht nur der von der Cuttingoberfläche zu beseitigenden Ölanteile sondern auch der dort aufgetragenen Feststoffanteile - Beschwerungsmittel, fluid-loss-Zusätze und dergleichen - in dem Waschöl erreicht werden. In einer Ausführungsform werden dabei zweckmäßigerweise als Emulgatorzusätze die W/O-Emulgatoren gewählt, die im Rahmen der Bohrspülung zur Herstellung des W/O-Invert-Schlammes Verwendung finden. Geeignete Emulgatoren der Praxis sind beispielsweise stickstoffhaltige Verbindungen aus den Klassen der Polyamine und/oder Polyamidoamine. Verwiesen sei in diesem Zusammenhang auf die einschlägige Fachliteratur beispielsweise G.R. Gray et al. "Composition and Properties of Oil Well Drilling Fluids" Gulf Publishing Company, Houston, London (1981), 4. Ausgabe, dort insbesondere Unterkapitel 7 und die hier zitierte Fachliteratur. Ein besonders geeigneter Emulgatortyp ist das von der einen Anmelderin unter dem Handelsnahmen "EZ-mul" vertriebene Produkt. Emulgatoren der hier betroffenen Art werden im Handel als hochkonzentrierte Wirkstoffaufbereitungen vertrieben und können den Waschölen beispielsweise in Mengen bis zu etwa 10 Gew.-%, vorzugsweise in Mengen von etwa 2,5 bis 5 Gew.-% - bezogen jeweils auf Ölphase - zugemischt werden.

Geeignet sind insbesondere aber auch W/O-Emulgatoren verbesserter ökologischer Verträglichkeit, wie sie insbesondere in den älteren Anmeldungen der einen Anmelderin gemäß DE-A-40 03 028, 40 24 658, 40 24 659, 40 24 892 und 41 02 908 beschrieben sind. In diesen älteren Anmeldungen werden ausgewählte Emulgatoren auf Etherbasis, auf Basis von alpha-Sulfofettsäure-Di-Salzen, auf Basis von Alkyl-Glykosidverbindungen, auf Basis von oberflächenaktiven Estersulfonatsalzen und auf Basis oberflächenaktiver Komplexester als W/O-Emulgatoren beschrieben.

Bezüglich der geschlossenen Ölphase in der W/O-Invert-Spülung, die im Rahmen der jeweils betroffenen Bohrung als Hauptarbeitsmittel zum Einsatz kommt, können mittels der erfindungsgemäßen Lehre nahezu beliebige Mischungsverhältnisse von Mineralöl und O-funktionalisiertem Waschöl eingestellt werden. Hier sind die jeweiligen Gegebenheiten des Austausches der Ölphasen und gegebenenfalls die zuvor geschilderte Verfahrensmodifikation zu berücksichtigen gemäß der wenigstens eine erste Waschstufe mit einem Waschöl auf Mineralölbasis durchgeführt werden kann, so daß nur ein abschließender Austausch der Ölphase auf der Cuttingoberfläche gegen die biologisch verträglichen O-funktionalisierten Waschöle im Sinne der Erfindung erforderlich ist. Wenn der Anteil dieser O-funktionalisierten Waschöle in der Invert-Bohrspülung im Betrieb letztlich auch mehr als 50 Vol.-% der geschlossenen Ölphase ausmachen kann, so ist es erfindungsgemäß jedoch - beispielsweise aus Gründen der Wirtschaftlichkeit - bevorzugt, den Mischungsanteil an O-funktionalisierten Waschölen in der Invert-Bohrspülung unter 50 Vol.-% beziehungsweise Gew.-% der geschlossenen Ölphase in der Bohrspülung zu halten. Es ist ohne weiteres möglich hier mit weitaus geringeren Mengen der vergleichsweise kostenspieligeren ökologisch verträglichen und biologisch akzeptablen Waschöle im Invert-Schlamm zu arbeiten. Der Anteil an Estern, Ethern und/oder Alkoholen der geschilderten Art in der Invert-Spülung kann damit weniger als 40 Gew.-%, vorzugsweise nicht mehr als etwa 20 bis 30 Gew.-% der Ölphase und insbesondere nicht mehr als etwa 5 bis 15 Gew.-% dieser Ölphase ausmachen. Gleichwohl ist durch die erfindungsgemäßen Maßnahmen sicherzustellen, daß ein Mineralölfreies oder praktisch Mineralölfreies Feststoffgut der Entsorgung durch biologischen Abbau zugeführt werden kann.

Der Aufbau der bevorzugt überwiegend Mineralöl-basierten Invert-Bohrspülschlämme entspricht im übrigen den üblichen Arbeitsanweisungen. Auf die eingangs zitierten älteren Anmeldungen und die dort zitierte Literatur kann in diesem Zusammenhang verwiesen werden. Lediglich auszugsweise sei daher hier zusammengefaßt: Invert-Bohrspülschlämme enthalten üblicherweise zusammen mit der geschlossenen Ölphase die fein-disperse wäßrige Phase in Mengen von etwa 5 bis 50 Gew.-%. Neben dem Wassergehalt kommen alle für vergleichbare Spülungstypen vorgesehenen Additive in Betracht. Diese Additive können wasserlöslich, öllöslich und/oder wasser- beziehungsweise öldispergierbar sein.

Übliche Additive sind neben den Emulgatoren beispielsweise fluid-loss-Additive, strukturviskositätaufbauende lösliche und/oder unlösliche Stoffe, Alkalireserven, Mittel zur Inhibierung des unerwünschten Wasseraustausches zwischen erbohrten Formationen, zum Beispiel Wasser - quellbare Tone und/oder Salzschichten - und der Spülflüssigkeit, Netzmittel zum besseren Aufziehen der Ölphase auf Feststoffoberflächen, zum Beispiel zur Verbesserung der Schmierwirkung, aber auch zur Verbesserung des oleophilen Verschlusses freigelegter Gesteinsformationen oder Gesteinsflächen, Biozide, beispielsweise zur Hemmung des bakteriellen Befalls der Emulsionen und dergleichen. Zusätzlich zur eingangs zitierten Fachliteratur sei insbesondere verwiesen auf die Literaturstelle G.R. Gray, a.a.O., insbesondere dort Kapitel 11, "Drilling Fluid Components". Nur auszugsweise sei dementsprechend zitiert:

Fein-disperse Zusatzstoffe zur Erhöhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier hydrophobierter Bentonit zu nennen. Auch der Mitverwendung organischer Polymerverbindungen natürlichen und/oder synthetischen Ursprungs kann Bedeutung zukommen.

Den unerwünschten Wasseraustausch mit beispielsweise Tonen inhibierende Zusatzstoffe: In Betracht kommen hier die aus dem Stand der Technik zu ölbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann. Neuere Vorschläge sehen hier den Einsatz niederer wasserlöslicher Alkohole wie Glycerin und/oder Propandiol vor. Verwiesen sei beispielsweise auch auf die Veröffentlichungen in "Petroleum Engineer International", September 1987, 32 - 40 und "World Oil", November 1983, 93 - 97.

Alkalireserven: In Betracht kommen hier auf das Gesamtverhalten der Spülung abgestimmte anorganische und/oder organische Basen, insbesondere entsprechende basische Salze beziehungsweise Hydroxide von Alkali- und/oder Erdalkalimetallen, sowie organische Basen. Kalk ist ein besonders wichtiger Vertreter dieser Klasse. Art und Menge dieser basischen Komponenten sind dabei in bekannter Weise aufeinander abgestimmt.

Die Menge der jeweils eingesetzten Hilfs- und Zusatzstoffe bewegt sich grundsätzlich im üblichen Rahmen und kann damit der zitierten einschlägigen Literatur entnommen werden.

### Beispiele

Die nachfolgenden Untersuchungen werden an einer Bohrkleinprobe vorgenommen, die dem laufenden Betrieb einer Nordseefeld-Bohrung entnommen worden war. Typ der Bohrspülung: W/O-Invert-Spülung Mineralöl-basiert. Der Mineralölgehalt des mit Bohrspülung kontaminierten Bohrkleins beträgt 13,8 Gew. -%.

100 g des mit Bohrspülung kontaminierten Bohrkleins werden mit 100 g eines Monocarbonsäureesteröles (Handelsprodukt "PETROFREE") versetzt und bei 40°C 5 Minuten intensiv in einem Becherglas verrührt. Anschließend wird über eine Glasfilternutsche abgesaugt. Die Produktausbeute der feuchten cuttings beträgt 97,7 g.

Die auf diese Weise isolierten cuttings werden nachfolgend in einem Soxleth-Gerät 8 Stunden mit n-Hexan extrahiert. Der angefallene Extrakt wird dann vorsichtig bei Raumtemperatur eingeengt.

8 g des so gewonnenen Extraktes werden auf eine Kieselgelsäule gegeben - Innendurchmesser der Säule 20 mm, effektive Säulenlänge 35 cm, Füllung der Säule mit Kieselgel 60 der Fa. Merck, Darmstadt (Korngrößenverteilung 0,063 bis 0,2 mm). Der aufgegebene Mineralölextrakt wird jetzt mit 250 ml n-Hexan über die Kieselgelsäule eluiert. Das Eluat wird aufgefangen. Der "PETROFREE"-Monocarbonsäureester und andere polare Bestandteile des Extraktes werden dabei an der Kieselgelsäule festgehalten.

Aus dem am Fuß der Kieselgelsäule aufgefangenen Eluat wird das n-Hexan durch Überblasen von Luft bis zur Gewichtskonstanz entfernt. Der auf diese Weise gewonnene gereinigte Mineralölrückstand wird ausgewogen und auf die eingesetzte Gesamtprobenmenge (100 g) hochgerechnet.

Der auf diese Weise bestimmte Mineralölgehalt der mit dem Monocarbonsäureester gewaschenen cuttings beträgt 1,709 g, entsprechend einem Restmineralölgehalt des Bohrkleins von 1,75 Gew.-%.

## Patentansprüche

1. Verwendung von ökologisch verträglichen und insbesondere biologisch abbaubaren Ölen mit Flammpunkten oberhalb 80°C zur Wäsche von Mineralöl-belastetem Bohrklein (cuttings) vor dessen Entsorgung durch off-shore und/oder on-shore Deponierung.

2. Verwendung nach Anspruch 1, dadurch gekennzeichnet, daß mit aerob und/oder anaerob abbaubaren niedrig-viskosen Ölen gearbeitet wird, die auch als Mischungsbestandteil der geschlossenen Ölphase von W/O-Invert-Bohrspülungen eingesetzt werden können.

3. Verwendung nach Ansprüchen 1 und 2, dadurch gekennzeichnet, daß in wenigstens einer abschließenden Waschstufe vor der Bohrkleinentsorgung Waschflüssigkeiten aus der Gruppe jeweils oleophiler Monocarbonsäureester, Polycarbonsäureester, Ether, Alkohole einschließlich deren Partialether und/oder Kohlensäureester (O-funktionalisierte Waschöle) eingesetzt werden.

4. Verwendung nach Ansprüchen 1 bis 3, dadurch gekennzeichnet, daß O-funktionalisierte Waschöle mit Fließ- und Stockpunkten unter 0°C, vorzugsweise unterhalb -5°C und insbesondere unterhalb -15°C, eingesetzt werden, die im Temperaturbereich 0 bis 5°C fließ- und pumpfähig sind und dabei bevorzugt eine Brookfield(RVT)-Viskosität nicht über 60 mPas, insbesondere unterhalb 45 mPas besitzen.

5. Verwendung nach Artsprüchen 1 bis 4, dadurch gekennzeichnet, daß beim Einsatz potentiell hydrolyse-gefährdeter Waschöle, insbesondere entsprechender Mono- und/oder Polycarbonsäureester, solche Waschöle eingesetzt werden, die auch bei partieller Verseifung im praktischen Einsatz keine toxikologischen und insbesondere keine inhalationstoxikologischen Gefährdungen auslösen.

6. Verwendung nach Ansprüchen 1 bis 5, dadurch gekennzeichnet, daß Waschöle eingesetzt werden, die wenigstens anteilig, bevorzugt wenigstens überwiegend auf Ester- und/oder Etherbasis aufgebaut sind.

7. Verwendung nach Ansprüchen 1 bis 6, dadurch gekennzeichnet, daß Waschöle auf Esterbasis aus wenigstens einer der nachfolgenden Unterklassen eingesetzt werden:
a) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Estern entsprechender aliphatisch gesättigter Monocarbonsäuren und 1- und/oder mehrfunktionellen Alkoholen der unter a) genannten Art,
c) Ester olefinisch 1- und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

8. Verwendung nach Ansprüchen 1 bis 6, dadurch gekennzeichnet, daß Waschöle auf Etherbasis eingesetzt werden, die Ether, Mischether und/oder Ethergemische von monofunktionellen Alkoholen mit wenigstens 6 C-Atomen enthalten, wobei auch Mischether mit eingebundenen Resten mehrwertiger Alkohole verwendet werden können.

9. Verwendung nach Ansprüchen 1 bis 6 und 8, dadurch gekennzeichnet, daß Waschöle auf Etherbasis verwendet werden, die sich von wenigstens anteilsweise, bevorzugt von wenigstens überwiegend geradkettigen monofunktionellen Alkoholen ableiten, wobei die Ether entsprechender Monoalkohole mit 8 bis 12 C-Atomen und/oder deren Mischether mit 2 bis 4-wertigen Alkoholen mit gerader und/oder verzweigter C-Kette besonders bevorzugt sind.

10. Verwendung nach Ansprüchen 1 bis 9, dadurch gekennzeichnet, daß Bohrklein aus der Abtrennung von Mineralöl-basierten Bohrspülungen unter Einsatz der biologisch abbaubaren O-funktionalisierten Waschöle von nicht abbaubaren Mineralölanteilen praktisch befreit wird und dabei vorzugsweise das mit Mineralöl beladene Waschöl wenigstens anteilsweise der ölbasierten Bohrspülung zugesetzt und damit entsorgt wird.

11. Verwendung nach Ansprüchen 1 bis 10, dadurch gekennzeichnet, daß eine mehrstufige Wäsche des abgetrennten und mit ölbasierter Bohrspülung belasteten Bohrkleins vorgenommen wird, wobei in wenigstens einer Spülstufe auch Waschöle auf Mineralöl-Basis eingesetzt werden können.

12. Verwendung nach Ansprüchen 1 bis 11, dadurch gekennzeichnet, daß in wenigstens einer Waschstufe unter Einsatz oder Mitverwendung von Mineralölfraktionen gearbeitet wird, die zum Aufbau der Bohrspülungen insbesondere vom Typ der W/O-Invert-Spülschlämme geeignet sind und daß dabei die beladenen Waschöle nach ihrer Abtrennung vom Bohrklein der Bohrspülung zugemischt werden, während das so vorgereinigte Bohrklein mit den biologisch abbaubaren O-funktionalisierten Waschölen nachgereinigt wird.

13. Verwendung nach Ansprüchen 1 bis 12, dadurch gekennzeichnet, daß die Bohrkleinwäsche im Gleichstrom und/oder im Gegenstrom mit dem Waschöl durchgeführt und dabei mit Arbeitstemperaturen im Bereich bis etwa 100°C gearbeitet wird, wobei Waschtemperaturen im Bereich von ca. 35 bis 80°C bevorzugt sein können.

14. Verwendung nach Ansprüchen 1 bis 13, dadurch gekennzeichnet, daß Emulgatoren - bevorzugt vom W/O-Typ - enthaltende Waschöle eingesetzt werden.

## Claims

1. Use of ecologically compatible, and more particularly of biologically degradable, oils having flash points of above 80 °C for washing mineral oil-loaded drill cuttings prior to the disposal thereof by off-shore and/or on-shore deposition.

2. The use according to claim 1, characterized in that aerobically and/or anaerobically degradable low-viscosity oils are employed which are also suitable for being used as a mixture component of the continuous oil phase of W/O invert drilling fluids.

3. The use according to claims 1 and 2, characterized in that washing liquids selected among the oleophilic compounds from the group consisting of monocarboxylic acid esters, polycarboxylic acid esters, ethers, alcohols, including the partial ethers thereof, and/or carbonic acid esters (O-functionalized wash oils) are employed in at least one final washing step prior to the waste disposal of said cuttings.

4. The use according to claims 1 to 3, characterized in that O-functionalized wash oils having pour points and setting points of below 0 °C, and preferably of below -5 °C, and especially of below -15 °C are employed which are flowable and pumpable in the temperature range of from 0 °C to 5 °C and which possess preferred Brookfield (RVT) viscosities of not more than 60 mPa·s, and especially of below 45 mPa·s.

5. The use according to claims 1 to 4, characterized in that, if wash oils which are potentially susceptible to hydrolysis, and especially esters of mono- and/or polycarboxylic acids, are used, only those esters are used which do not cause any toxicological, and especially no inhalation-toxicological, danger to be induced upon a partial saponification in practical use.

6. The use according to claims 1 to 5, characterized in that wash oils are used which at least in part, and preferably at least predominantly are composed on an ester-and/or ether-base.

7. The use according to claims 1 to 6, characterized in that ester-based wash oils are used which have been selected from at least one of the following subclasses:
a) Esters of C₁₋₅-monocarboxylic acids and mono- and/or polyfunctional alcohols, whereof the moieties of monohydric alcohols comprise at least 6 carbon atoms and preferably at least 8 carbon atoms and the polyhydric alcohols preferably have from 2 to 6 carbon atoms in the molecule,
b) Esters of monocarboxylic acids of synthetic and/or natural origin comprising from 6 to 16 carbon atoms, and more specifically esters of aliphatic saturated monocarboxylic acids and mono- and/or polyfunctional alcohols of the kind mentioned in a),
c) Esters of olefinically mono- and/or polyunsaturated monocarboxylic acids having at least 16, and especially 16 to 24 carbon atoms and especially monofunctional straight-chain and/or branched alcohols.

8. The use according to claims 1 to 6, characterized in that ether-based wash oils are used which contain ethers, mixed ethers and ether mixtures of monofunctional alcohols having at least 6 carbon atoms, wherein also mixed ethers with incorporated moieties of polyhydric alcohols can be used.

9. The use according to claims 1 to 6 and 8, characterized in that ether-based wash oils are used that are derived at least in part, and preferably at least predominantly, from straight-chain monofunctional alcohols, the ethers of the respective mono-alcohols having from 8 to 12 carbon atoms and/or the mixed ethers thereof with di- to tetrahydric alcohols having straight-chain and/or branched carbon chains being particularly preferred.

10. The use according to claims 1 to 9, characterized in that the drill cuttings removed from the mineral oil-based drilling fluids are virtually cleared of non-degradable mineral oil portions by using the biologically degradable O-functionalized wash oils, wherein the wash oil contaminated with mineral oil, at least in part, is preferably added to the oil-based drilling fluid and thereby disposed of.

11. The use according to claims 1 to 10, characterized in that the operation of washing the drill cuttings contaminated with the oil-based drilling fluid is carried out in more than one step, wherein also mineral oil-based wash oils may be used in at least one washing step.

12. The use according to claims 1 to 11, characterized in that at least one washing step is carried out with the use or concomitant use of mineral oil fractions which are suitable in composing drilling fluids of especially the type of W/O invert sweeping muds and that in the course thereof the contaminated wash oils, once removed from the cuttings, are admixed to the drilling fluid, while the drill cuttings thus pre-cleaned is after-cleaned with the biologically degradable O-functionalized wash oils.

13. The use according to claims 1 to 12, characterized in that the procedure of washing the drill cuttings makes use of cocurrent streams and/or of counter-current streams of the wash oil and drilling mud, respectively, and that the working temperature is up to about 100 °C, while washing temperatures of from about 35 °C to about 80 °C may be preferred.

14. The use according to claims 1 to 13 characterized in that wash oils containing emulsifiers - preferably those of the W/O type - are used.

## Revendications

1. Utilisation d'huiles en accord au point de vue écologique et en particulier dégradables biologiquement avec des points d'inflammation supérieurs à 80°C pour le lavage de déblais de forage (cuttings) chargés d'huile minérale avant leur élimination par dépôt en mer et/ou sur terre.

2. Utilisation selon la revendication 1, caractérisée en ce qu'on opère avec des huiles à basse viscosité dégradable de manière aérobie et/ou anaérobie, qui peuvent être mises en oeuvre aussi comme composant du mélange de la phase huileuse formée des liquides de lavage de forage inversés W/O.

3. Utilisation selon les revendications 1 et 2, caractérisée en ce que dans au moins une étape de lavage finale avant le déblaiement des débris de forage, on met respectivement en oeuvre des liquides de lavage du groupe des esters d'acides monocarboxyliques, des esters d'acides polycarboxyliques, des éthers, des alcools y compris leurs éthers partiaux et/ou des esters d'anhydride carbonique (huiles de lavage fonctionnalisées par O).

4. Utilisation selon les revendications 1 à 3, caractérisée en ce qu'on met en oeuvre des huiles de lavage fonctionnalisées par O avec des points de trouble d'écoulement et des points de congélation en dessous de 0°C, de préférence inférieurs à -5°C et en particulier en dessous de -15°C, qui sont aptes à l'écoulement et au pompage dans la plage de températures de 0 à 5°C et possèdent en outre une viscosité Brookfield (RVT) non supérieure à 60 mPas, en particulier inférieure à 45 mPas.

5. Utilisation selon les revendications 1 à 4, caractérisée en ce que lors de l'emploi d'huiles de lavage potentiellement menacées d'hydrolyse, en particulier des esters d'acides mono et/ou polycarboxyliques, on met en oeuvre des huiles, qui également dans le cas de saponification partielle dans l'usage pratique ne provoquent pas de risques toxicologiques et en particulier toxicologiques par inhalation.

6. Utilisation selon les revendications 1 à 5, caractérisée en ce qu'on utilise des huiles de lavage, qui au moins en partie, de préférence au moins principalement sont constituées à base d'esters et/ou d'éthers.

7. Utilisation selon les revendications 1 à 6, caractérisée en ce qu'on utilise des huiles de lavage à base d'esters d'au moins une des sous-classes suivantes :
a) Esters d'acides monocarboxyliques en C₁₋₅ et d'alcools mono et/ou plurifonctionnels, dans lesquels des radicaux d'alcools monovalents comportent au moins 6, de préférence au moins 8 atomes de C et les alcools plurivalents possèdent de préférence de 2 à 6 atomes de C dans la molécule,
b) Esters d'acides monocarboxyliques d'origine synthétique et/ou naturelle avec de 6 à 16 atomes de C, en particulier d'acides monocarboxyliques aliphatiquement saturés correspondants aux esters et d'alcools mono et/ou plurifonctionnels du type indiqué dans a),
c) Esters d'acides monocarboxyliques oléfiniquement une fois et/ou plusieurs fois non saturés, avec au moins 16, en particulier de 16 à 24 atomes de C et d'alcools en particulier monofonctionnels à chaîne droite et/ou ramifiés.

8. Utilisation selon les revendications 1 à 6, caractérisée en ce qu'on utilise des huiles de lavage à base d'éthers, qui contiennent des éthers, des éthers mixtes et/ou des mélanges d'éthers d'alcools monofonctionnels ayant au moins 6 atomes de C, tandis qu'on peut aussi utiliser des éthers mixtes avec des radicaux liés d'alcools plurivalents.

9. Utilisation selon les revendications 1 à 6 et 8, caractérisée en ce qu'on utilise des huiles de lavage à base d'éthers, qui dérivent au moins partiellement, de préférence au moins principalement d'alcools monofonctionnels à chaîne droite, tandis qu'on préfère particulièrement les éthers de monoalcools correspondants avec de 8 à 12 atomes de C et/ou leurs éthers mixtes avec des alcools ayant de 2 à 4 valences et une chaîne carbonée droite et/ou ramifiée.

10. Utilisation selon les revendications 1 à 9, caractérisée en ce que les déblais de forage provenant de la séparation de liquides de lavage à base d'huile minérale sont pratiquement libérés des parties d'huile minérale non dégradable, en utilisant de l'huile de lavage fonctionnalisée par O dégradable biologiquement et en outre de préférence l'huile de lavage chargée d'huile minérale est ajoutée au moins proportionnellement au liquide de lavage de forage à base d'huile et ensuite est éliminée.

11. Utilisation selon les revendications 1 à 10, caractérisée en ce qu'on entreprend un lavage en plusieurs étapes des déblais de forage séparés et chargés de liquide de lavage de forage à base d'huile, tandis qu'on peut mettre aussi en oeuvre dans au moins une étape de lavage de l'huile de lavage à base d'huile minérale.

12. Utilisation selon les revendications 1 à 11, caractérisée en ce qu'on opère au point dans une étape de lavage en utilisant ou en co-utilisant des fractions d'huile minérale, qui sont appropriées pour la constitution des liquides de lavage en particulier du type des boues de forage inversées W/O et en ce que les huiles de lavage chargées sont ajoutées et mélangées au liquide de lavage de forage après leur séparation des déblais de forage, tandis que les déblais de forage ainsi prépurifiés sont purifiés ensuite avec les huiles de lavage fonctionnalisées par O biologiquement dégradables.

13. Utilisation selon les revendications 1 à 12, caractérisée en ce que le lavage des déblais de forage est réalisé en écoulement de même sens et/ou à contre courant avec l'huile de lavage et en outre est opéré avec des températures de travail au niveau environ de 100°C, des températures dans la plage environ de 35 à 80°C pouvant être préférées.

14. Utilisation selon les revendications 1 à 13, caractérisée en ce qu'on met en jeu des huiles de lavage contenant des émulsionnants de préférence du type W/O.
